# EUROPEAN PATENT APPLICATION

(11) **EP 2 703 805 A2**
(43) Date of publication of application: **05.03.2014**
(21) Application number: 13181666.2
(22) Date of filing: 26.08.2013
(51) Int. Cl.: G01N 27/416

(54) **Pretreatment system and method before measuring the calcium ion concentration in a sample solution**

(30) Priority: 04.09.2012 JP 2012194597
(71) Applicant: HORIBA, LTD., Kyoto-shi, Kyoto 601-8510 (JP)
(72) Inventor: Kuwamoto, Keiko, Kyoto-shi, Kyoto 601-8510 (JP); Iwamoto, Yasukazu, Kyoto-shi, Kyoto 601-8510 (JP); Aomi, Takashi, Kyoto-shi, Kyoto 601-8510 (JP)
(74) Representative: Isarpatent

(57) **Abstract**

The present invention is mainly intended to provide a pretreatment system that can use an calcium ion electrode to accurately measure calcium ion concentration with a simple configuration, and the pretreatment system is a pretreatment system 1 that is intended to perform pretreatment before measuring calcium ion concentration in a sample solution containing a calcium compound with a calcium ion electrode, and provided with: an acid adding mechanism 3 that adds acid to the sample solution; and a base adding mechanism 4 that adds base to the sample solution added with the acid.

## Description

### Technical Field

This invention relates to a pretreatment system and method for performing pretreatment before measuring calcium ion concentration in a sample solution containing a calcium compound with a calcium ion electrode.

### Background Art

As a method for measuring calcium content of each of various types of beverages such as milk beverages such as milk, sports drinks, and mineral waters, various methods such as ion chromatography (IC) and ICP-OES analysis are known; however, as a method that can be simply performed at low cost, for example, there is a calcium ion electrode method described in Patent literature 1.

The measuring method described in Patent literature 1 is one that prepares a calibration curve between calcium ion concentration and an ion meter indication of a sample solution having known calcium content, in which acid is added to the sample solution to regulate a pH value to 4.3 to 7.0; measures an ion meter indication of an analysis sample having unknown calcium content, in which acid is added to the analysis sample, which is the same type of solution as the sample solution, to regulate a pH value to 4.3 to 7.0; and from the prepared calibration curve and the ion meter indication of the analysis sample, measures calcium concentration of the analysis sample. Citation List Patent Literature

[Patent literature 1] JPA 04-64054

### Summary of Invention

### Technical Problem

However, many calcium compounds are hardly soluble as their properties, and in a solution, often present not as ion states but as the compounds. For this reason, only regulating a pH value of a liquid mixture to 4.3 as in the method described in Patent literature 1 has a problem that it is not sufficient to obtain a measured value taking into account an accurate ionization ratio of a calcium compound contained in the analysis sample, and therefore a measured value of a calcium ion electrode is uncertain.

Also, the method described in Patent literature 1 has a problem of taking time for the measurement because the method cannot measure calcium ion concentration of the analysis sample unless the calibration curve is prepared, and also has a problem that the measuring method is complicated because the method can grasp only calcium concentration of the same type of analysis sample as a sample solution for which a calibration curve is prepared, and therefore for all analysis samples of which calcium concentrations are to be measured, calibration curves should be prepared.

The present invention is intended to solve the above-described problems, and made in order to provide a pretreatment system and method that, in order to simply and accurately measure calcium ion concentration in a sample solution, perform pretreatment before the measurement. Solution to Problem

That is, the pretreatment system according to the present invention is a pretreatment system that is intended to perform pretreatment before measuring calcium ion concentration in a sample solution containing a calcium compound with a calcium ion electrode, and provided with: an acid adding mechanism that adds acid to the sample solution; and a base adding mechanism that adds base to the sample solution added with the acid.

According to such a pretreatment system, an amount of the acid to be added from the acid adding mechanism can be regulated to substantially completely ionize the calcium compound in the sample solution, and also with the calcium compound being ionized, the base can be added to the sample solution from the base adding mechanism to meet a pH value that is measurable with the calcium ion electrode, so that the pretreatment can be performed so as to be able to simply and accurately measure the calcium ion concentration.

Also, preferably, for example, the acid is an inorganic acid, and in particular, one type of acid selected from a group consisting of a hydrochloric acid and a nitric acid, and the base is one type of base selected from a group consisting of sodium hydroxide, potassium hydroxide, ammonia, a Good's buffer solution, a tris buffer solution, and a tris-hydrochloric acid buffer solution, and in particular, a buffer solution. In particular, the inorganic acid does not form a hardly soluble salt by bonding to calcium, and as compared with the case of adding an organic acid, the measurement can be performed with accuracy. Also, the buffer solution can easily perform regulation without largely changing pH at the time of the addition. In addition, as the Good' buffer solution, for example, MES, PIPES, cholamine chloride, BES, TES, HEPES, or the like can be cited.

By using such acid and base, the pH can be regulated without rebonding of a calcium ion contained in the sample solution, and therefore the calcium ion concentration can be measured with accuracy.

In the pretreatment system according to the present invention, preferably, the acid adding mechanism is a mechanism that adds such an amount of acid as to make a pH value of the sample solution equal to or less than 3; and the base adding mechanism is a mechanism that adds such an amount of base as to make the pH value of the sample solution equal to or more than 4.

According to such a pretreatment system, the calcium compound can be almost completely ionized by the acid added by the acid adding mechanism. Also, the calcium ion electrode to measure the calcium ion concentration has a measurable pH region of 4 or more in terms of characteristics of the electrode, and therefore, preferably, the base adding mechanism adds the base to the sample solution so as to make the pH value of the sample solution equal to or more than 4.

Also, in the above-described configuration, in particular, in the case where the calcium compound contained in the sample solution is an inorganic salt, the base adding mechanism is preferably a mechanism that adds such an amount of base as to make the pH value of the sample solution equal to or more than 5.

As the pretreatment method according to the present invention, a pretreatment method that is performed before measuring calcium ion concentration in a sample solution containing a calcium compound with a calcium ion electrode, and provided with: an acid adding step of adding acid to the sample solution to ionize the calcium compound in the solution; and a base adding step of adding base to the sample solution in a state where a calcium ion compound is ionized can be cited.

### Advantageous Effects of Invention

As described, according to the present invention, with the pretreatment system having a simple configuration, the calcium ion electrode can be used to accurately measure the calcium ion concentration. Brief Description of Drawings
FIG. 1 is a schematic diagram of a pretreatment system in one embodiment of the present invention;
FIG. 2 is a schematic diagram of a pretreatment system in another embodiment of the present invention;
FIG. 3 is a graph illustrating a correlationship between a calcium ion electrode measured value and an indicated value in a first test example; and
FIG. 4 is a graph illustrating a correlationship between a calcium ion electrode measured value and an IC measured value in a second test example.

### Description of Embodiments

In the following, one embodiment of the present invention is described.

A pretreatment system 1 of the present embodiment is one that is used for pretreatment at the time of measuring calcium ion concentration in a sample solution containing a calcium compound with a calcium ion electrode.

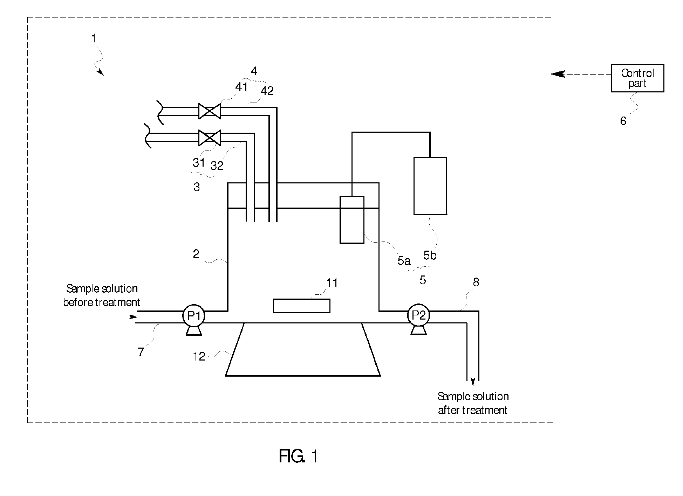

The pretreatment system 1 of the present embodiment is, as illustrated in FIG. 1, provided with: a regulating tank 2 that contains the sample solution; an acid adding mechanism 3 that adds an acid solution to the sample solution contained in the regulating tank 2; a base adding mechanism 4 that adds a basic solution to the sample solution contained in the regulating tank 2; a pH meter 5 that measures a pH value of the sample solution contained in the regulating tank 2; and a control part 6 that controls the regulating tank2, acid adding mechanism 3, and base adding mechanism 4.

The regulating tank 2 is, on lateral surfaces thereof, provided with two introduction ports, and one of the introduction ports is connected to a sample solution injection path 7 provided with a peristaltic pump P1, whereas the other introduction port is connected to a sample solution discharge path 8 provided with a peristaltic pump P2. The sample solution injection path 7 and sample solution discharge path 8 near the respective introduction ports are provided with unillustrated valves. Also, the sample solution appropriately sent through the sample solution injection path 7 by the peristaltic pump P1 is contained in the regulating tank 2, and the sample solution regulated in the regulating tank 2 is discharged through the sample solution discharge path 8 by the peristaltic pump P2. During the regulation of the sample solution in the regulating tank 2, the valves respectively provided in the sample solution injection path 7 and the sample solution discharge path 8 are closed to prevent an error from occurring in the sample solution.

Also, on a bottom surface of the regulating tank 2, a stirring bar 11 is arranged, and in a location facing to the stirring bar across the bottom surface of the regulating tank 2, a magnetic stirrer 12 is arranged. The sample solution contained in the regulating tank 2 is stirred by the stirring bar 11 that is rotated by magnetic force generated in the magnetic stirrer 12.

The acid adding mechanism 3 is provided with: an unillustrated storage tank that contains the acid solution; and a tube 32 having a valve 31, which connects the storage tank and the regulating tank 2 to each other. Part of the unillustrated storage tank is provided with a hole part, and one end of the tube 32 provided with the valve 31 is connected with the hole part, whereas the other end of the tube 32 is inserted into the sample solution contained in the regulating tank 2. When the valve 31 is opened, the acid adding mechanism 3 adds the acid solution to the sample solution contained in the regulating tank 2. As the acid solution, a solution not having bondability to calcium is used, such as a hydrochloric acid solution or a nitric acid solution.

The base adding mechanism 4 is provided with: an unillustrated storage tank that contains the basic solution; and a tube 42 having a valve 41, which connects the storage tank and the regulating tank 2 to each other. Part of the unillustrated storage tank is provided with a hole part, and one end of the tube 42 provided with the valve 41 is connected with the hole part, whereas the other end of the tube 42 is inserted into the sample solution contained in the regulating tank 2. When the valve 41 is opened, the base adding mechanism 4 adds the basic solution to the sample solution contained in the regulating tank 2. As the basic solution, a solution such as a sodium hydroxide solution, potassium hydroxide solution, ammonia solution, Good's buffer solution, tris buffer solution, or tris-hydrochloric acid buffer solution is used. Note that the basic solution sent from the base adding mechanism 4 may be added with a certain amount of supporting electrolyte (e.g., an ionic strength regulating agent or a solution containing an ionic strength regulating agent). As the supporting electrolyte, for example, KCl, KNO₃, or the like can be cited.

The pH meter 5 is provided with: a pH electrode 5a that is inserted into the sample solution in the regulating tank 2; and a main body part 5b that is directly or indirectly connected to the pH electrode 5a. The pH electrode 5a is a complex one in which a pH electrode and a comparison electrode are integrated, and on the basis of a potential difference generated between the pH electrode and the comparison electrode, measures the pH value of the solution. In addition, as the pH electrode 5a, a glass electrode is also possible, or a liquid membrane type may be used.

The control part 6 is a so-called computer circuit that structurally has a CPU, an internal memory, an I/O buffer circuit, an A/D converter, and the like. Also, the control part 6 operates according to a program stored in a predetermined area of the internal memory, and thereby performs information processing to fulfill a function of controlling the peristaltic pumps P1 and P2 and the valves 31 and 41.

An example of a pretreatment method using the pretreatment system 1 configured as described above is described below.
(1) The sample solution appropriately sent through the sample solution injection path 7 by the peristaltic pump P1 is injected into the regulating tank 2.
(2) An acid adding step of, while measuring the pH value of the sample solution with the pH meter 5, opening the valve 31 to add an appropriate amount of acid solution from the acid adding mechanism 3 to the sample solution, and thereby regulating the pH value of the sample solution to 3 or less is performed. For example, it is preferable to regulate the pH value of the sample solution to a value between 2.0 and 2.7.
(3) The sample solution is diluted by being added with pure water.
(4) A base adding step of, while measuring the pH value of the sample solution with the pH meter 5, opening the valve 41 to add an appropriate amount of basic solution and a certain amount of supporting electrolyte from the base adding mechanism 4 to the sample solution, and thereby regulating the pH value of the sample solution to 4 or more is performed. Note that, for example, in the case where the sample solution is a milk beverage such as milk or yoghurt, it is preferable to regulate the pH value of the sample solution to a value between 4.0 and 5.0. In addition, in the case where the sample solution is a drink such as a mineral water or a sport drink, it is preferable to regulate the pH value of the sample solution to a value between 6.0 and 7.0. Note that in the case where the basic solution is not added with the certain amount of supporting electrolyte, the regulation may be performed so as to, while measuring electrical conductivity of the sample solution with an electrical conductivity meter 9, adding an appropriate amount of supporting electrolyte to the sample solution to make the electrical conductivity of the sample solution coincide with that of calibration liquid.
(5) The sample solution in the regulating tank 2 is appropriately sent to the sample solution discharge path 8 by the peristaltic pump P2.

According to such a pretreatment system 1, an amount of acid to be added from the acid adding mechanism 3 can be regulated to substantially completely ionize the calcium compound in the sample solution, and also with the calcium compound being ionized, base can be added from the base adding mechanism 4 to the sample solution so as to make the pH value equal to a pH value measurable with the calcium ion electrode, so that the pretreatment enabling simple and accurate measurement can be performed.

Also, by, as the acid solution, using a solution not having bondability to calcium, such as a hydrochloric acid solution or a nitric acid solution, and as the basic solution, using a solution such as a sodium hydroxide solution, potassium hydroxide solution, ammonia solution, Good's buffer solution, tris buffer solution, or tris-hydrochloric acid buffer solution, without bonding of acid or base to a calcium ion in the sample solution, pH can be regulated to measure the calcium ion concentration with accuracy. In addition, as the Good's buffer solution, for example, MES, PIPES, cholamine chloride, BES, TES, HEPES, or the like can be cited.

Also, the certain amount of supporting electrolyte is added to the basic solution, and therefore ionic strength of the sample solution and that of the calibration liquid can be made to coincide with each other to measure a more accurate measured value. In addition, by further providing such a pretreatment system 1 with the electrical conductivity meter 9, the pretreatment of, while measuring the electrical conductivity of the sample solution with the electrical conductivity meter 9, regulating an additive amount of the supporting electrolyte so as to make the electrical conductivity of the sample solution coincide with that of the calibration liquid can also be performed.

According to such a pretreatment method, the sample solution is diluted by being added with pure water, and therefore the calcium ion in the sample solution can be more separated to obtain an accurate measured value.

Note that the present invention is not limited to the above-described embodiment. For example, the present invention may make up a kit of an instruction manual that describes the above-described pretreatment method, the acid solution, and the basic solution, and perform the pretreatment with use of the kit. Also, the basic solution may be mixed with a supporting electrolyte.

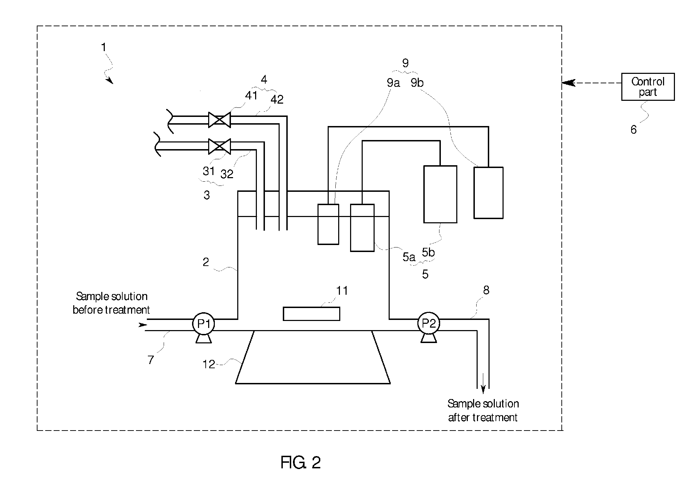

Further, as illustrated in FIG. 2, the pretreatment system 1 may be separately provided with the electrical conductivity meter 9. The electrical conductivity meter 9 is provided with: an electrode 9a that is inserted into the sample solution in the regulating tank 2; and a main body part 9b that is directly or indirectly connected to the electrode 9a. The electrode 9a is one that uses an AC two-electrode method, and is intended to measure current flowing between two electrodes inserted into the solution to thereby measure electrical conductivity. Note that an electrical conductivity meter based not on the AC two-electrode method but on an AC four-electrode method may be used.

Besides, the present invention can be variously modified without departing from the scope thereof.

### [Examples]

In the following, examples are taken to describe the present invention in more detail; however, the present invention is not limited to only any of the examples.

### [First test example]

Milk beverages such as milk and yoghurt were used as sample solutions (sample 1 to sample 4) to measure calcium contents. Here, the samples 1 and 2 were milk, the sample 3 was fermented milk, and the sample 4 was a milk beverage.

As a method for measuring the calcium contents of the sample solutions, ion chromatography (IC), ICP-OES analytical method, and calcium ion electrode method (LAQUAtwin calcium ion meter manufactured by Horiba, Ltd.) were used.

For each of the samples 1 to 4 that were to be measured with a calcium ion electrode, for comparison, an unpretreated sample and pretreated samples were prepared. As the pretreated samples, samples respectively pretreated by the following two methods were separately prepared.

### <Regarding first pretreatment>

(1) An acid adding step of adding 100 µL of 5 mol/L hydrochloric acid solution to 5 mL of sample solution to regulate a pH value of the sample solution to a value between 2.0 and 2.7 was performed.
(2) The sample solution was diluted 10 times by being added with 45 mL of pure water.
(3) A base adding step of adding Tris to regulate the pH value of the sample solution to a value between 4.0 and 5.0 was performed.
(4) As a supporting electrolyte, KCl was added to make electrical conductivity of the sample solution coincide with that of calibration liquid.

### <Regarding second pretreatment>

(1) An acid adding step of adding 100 µL of 5 mol/L hydrochloric acid solution to 5 mL of sample solution to regulate a pH value of the sample solution to a value between 2.0 and 2.7 was performed.
(2) The sample solution was diluted 10 times by being added with 45 mL of pure water.
(3) A base adding step of adding Tris to regulate the pH value of the sample solution to a value between 6.0 and 7.0 was performed.
(4) As a supporting electrolyte, KCl was added to make electrical conductivity of the sample solution coincide with that of calibration liquid.

Results of the first test example are listed in Table 1. Note that in Table 1, an indicated value refers to a value preliminarily indicated on a product by a manufacturer, respectively.

**[Table 1]**

| | Indicated value (ppm) | IC (ppm) | ICP-OES (ppm) | Calcium ion electrode (ppm) | | |
|---|---|---|---|---|---|---|
| | | | | Without pretreatment | With pretreatment (first pretreatment method) | With pretreatment (second pretreatment method) |
| Sample 1 | 1135 | 1022 | 1041 | 98 | 1100 | 620 |
| Sample 2 | 1320 | 1300 | 1286 | 120 | 1300 | 1100 |
| Sample 3 | 1000 | 1282 | 1104 | 630 | 990 | 840 |
| Sample 4 | 540 | 600 | 573 | 300 | 510 | 110 |

As listed in Table 1, between "with pretreatment" and "without pretreatment", large differences are found in measured values respectively obtained by measuring calcium ion concentrations of the samples 1 to 4 with the calcium ion electrode. The calcium ion electrode measured values of the samples without pretreatment exhibit different values from the indicated values preliminarily indicated on packages of the samples, respectively. On the other hand, it turns out that the calcium ion electrode measured values of the samples with pretreatment are clearly close to the indicated values as compared with the calcium ion electrode measured values of the samples without pretreatment.

Regarding the calcium ion electrode measured values of the samples with pretreatment, when comparing the calcium ion electrode measured values of the samples pretreated by the first pretreatment method and the calcium ion electrode measured values of the samples pretreated by the second pretreatment method with each other, the calcium ion electrode measured values of the samples pretreated by the first pretreatment method are values more approximate to the indicated values, respectively.

This is, as a cause, considered to be related to casein. That is, the sample solutions of the present example are the milk beverages such as milk and yoghurt, and therefore in the sample solutions, a lot of casein that is a main constituent of milk protein and phosphoprotein is contained. Note that the isoelectric point of casein is 4.6. For this reason, in the case of the first pretreatment method that, in the base adding step, regulates the pH value of each of the sample solutions to a value between 4.0 and 5.0, it is considered that casein in the sample solution does not rebond to the calcium ion once ionized in the acid adding step, and therefore more accurate calcium ion concentration can be measured. However, in the case of the second pretreatment method 2 that, in the base adding step, regulates the pH value of each of the sample solutions to a value between 6.0 and 7.0, it is considered that casein in the sample solution rebonds to the calcium ion once ionized in the acid adding step, and therefore as compared with the first pretreatment method, accurate calcium ion concentration cannot be measured.

Note that, in particular, regarding the fermented milk used as the sample 3, or the milk beverage used as the sample 4, the fermented milk or the milk beverage is in a state where the calcium ion bonds to a lactic acid, and therefore it is difficult to measure accurate calcium ion concentration; however, by using the first pretreatment method, accurate calcium ion concentration can be measured even for the fermented milk or the milk beverage.

In addition, as listed in Table 1, when comparing the indicated values, IC measured values, ICP-OES measured values, and calcium ion electrode measured values (measured using the first pretreatment method) with one another, the calcium ion electrode measured values are more approximate to the indicated values than the IC or ICP-OES measured values.

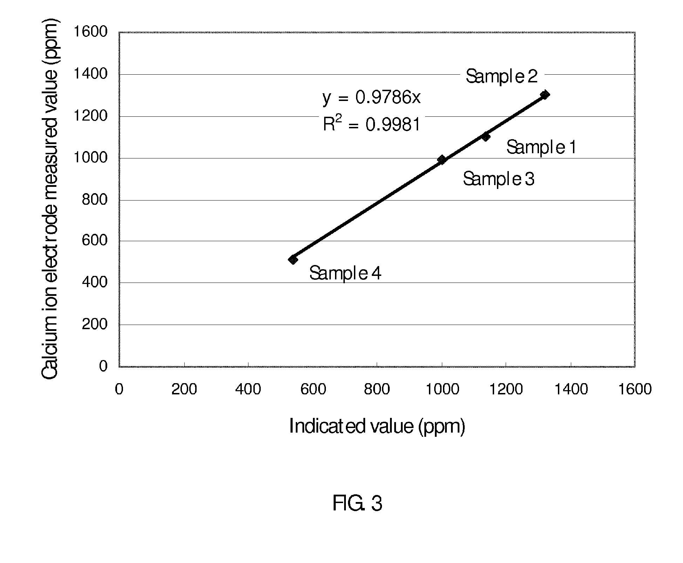

FIG. 3 is a graph illustrating a correlationship between the indicated values and the calcium ion electrode measured values (measured using the first pretreatment method). As illustrated in FIG. 3, a correlation coefficient between the indicated values and the calcium ion electrode measured values is approximately 0.99, which is close to 1. Therefore, it turns out that the calcium ion electrode measured values have a correlationship with the indicated values, and the calcium ion electrode measured values of the samples pretreated by the first pretreatment method of the present invention are accurate values approximate to the indicated values.

### [Second test example]

Mineral waters of which calcium contents were unknown were used as sample solutions (sample 5 to sample 10) to measure calcium contents.

As a method for measuring the calcium contents, ion chromatography method (IC), and calcium ion electrode method (LAQUAtwin calcium ion meter manufactured by Horiba, Ltd.) were used.

For each of the samples 5 to 10 that were to be measured with a calcium ion electrode, for comparison, samples without pretreatment and samples with pretreatment were prepared. Also, as both of the samples without pretreatment and the samples with pretreatment, samples with supporting electrolyte, each of which was, as the supporting electrolyte, added with KCL to make electrical conductivity of the sample solution coincide with that of calibration liquid, and samples each of which was not added with KCL as an electrolyte were separately prepared. As the pretreatment, the following method was performed.
(1) An acid adding step of adding 10 to 30 µL of 5 mol/L hydrochloric acid solution to 5 mL of sample solution to regulate a pH value of the sample solution to a value between 2.0 and 2.7 was performed.
(2) A base adding step of adding a tris buffer solution (a buffer solution having a pH value of 7.0) to dilute the sample solution 3 to 5 times, and regulating the pH value of the sample solution to a value between 6.0 and 6.8 was performed.

Results of the second test example are listed in Table 2.

**[Table 2]**

| | IC (ppm) | Calcium ion electrode (ppm) | | | |
|---|---|---|---|---|---|
| | | Without pretreatment | | With pretreatment | |
| | | Without supporting electrolyte | With supporting electrolyte | Without supporting electrolyte | With supporting electrolyte |
| Sample 5 | 54 | 110 | 65 | 140 | 68 |
| Sample 6 | 82 | 130 | 82 | 165 | 90 |
| Sample 7 | 96 | 110 | 88 | 168 | 108 |
| Sample 8 | 432 | 410 | 320 | 600 | 405 |
| Sample 9 | 591 | 440 | 390 | 690 | 510 |
| Sample 10 | 627 | 440 | 400 | 920 | 600 |

As listed in Table 2, between "without supporting electrolyte" and "with supporting electrolyte", large differences are found in the calcium ion electrode measured values of the samples 5 to 10, and the samples with supporting electrolyte obtains values more approximate to IC measured values, respectively. This is considered to be because by adding the supporting electrolyte to make ionic strength of each of the sample solutions coincide with that of the calibration liquid, electrical conductivity of the solution is increased to make it difficult for a measurement error to occur.

Also as listed in Table 2, between the calcium ion electrode measured values of the samples without pretreatment (with supporting electrolyte) and the calcium ion electrode measured values of the samples with pretreatment (with supporting electrolyte), more significant differences are found as the calcium content of a sample is increased, and the calcium ion electrode measured values of the samples with pretreatment are values more approximate to the IC measured values, respectively.

The reason why as the calcium ion content of a sample is increased, calcium ion electrode measured values of samples with pretreatment are more approximate to corresponding IC measured values is considered as follows. That is, it is considered that as the calcium content is increased, an equilibrium state shifts in a direction in which a free calcium ion converts to a calcium compound, so that in the samples without pretreatment, a calcium ion ionization degree is low, and therefore the calcium ion electrode measured values of the samples are different from the IC measured values, respectively. On the other hand, regarding the samples with pretreatment, even in the case where the calcium compound content in a sample solution is increased, a calcium compound is ionized in the acid adding step, so that the calcium ion ionization degree is high, and therefore the calcium ion electrode measured values are values approximate to the IC measured values, respectively.

Also, the reason why the calcium ion electrode measured values of the samples with pretreatment are values approximate to the IC measured values, respectively is considered to be because the acid adding step of regulating the pH values of the sample solutions to values between 2.0 and 2.7 causes carbonate ions contained in the sample solutions to gasify and outgas, and in the subsequent base adding step of regulating the pH values to values between 6.0 and 6.8, the carbonate ions do not rebond to any calcium ion. It is also considered that by performing the acid adding step and the base adding step on the sample solutions, interfering ions such as an iron ion and a zinc ion are unlikely to influence the sample solutions.

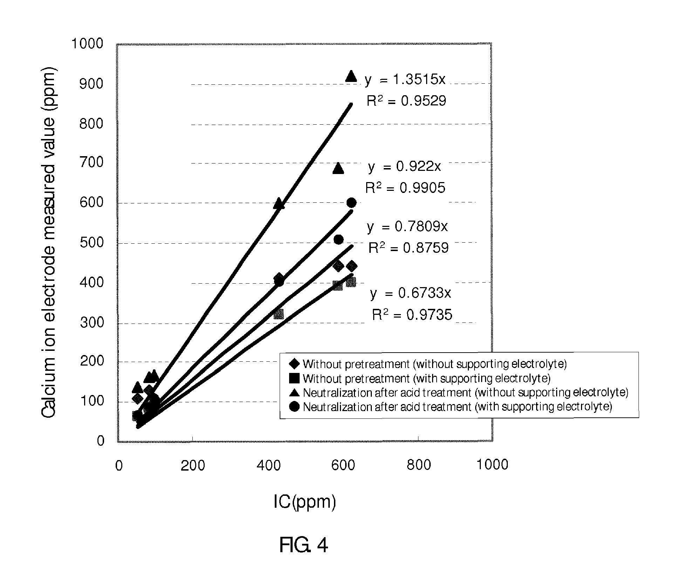

FIG. 4 is a graph illustrating a correlationship between the IC measured values and the calcium ion electrode measured values. As illustrated in FIG. 4, regarding the calcium ion electrode measured values of the samples prepared by performing the pretreatment and adding the supporting electrolyte, a correlation coefficient with the IC measured values is a value more approximate to 1 as compared with the calcium ion electrode measured values of the other samples. For this reason, it is considered that by performing the pretreatment and adding the supporting electrolyte, the calcium ion concentrations of the samples can be more accurately measured. Reference Signs List
1: Pretreatment system
2: Regulating tank
3: Acid adding mechanism
4: Base adding mechanism
5: pH meter

## Claims

1. A pretreatment system that is intended to perform pretreatment before measuring calcium ion concentration in a sample solution containing a calcium compound with a calcium ion electrode, the pretreatment system comprising:
an acid adding mechanism that adds acid to the sample solution; and
a base adding mechanism that adds base to the sample solution added with the acid.

2. The pretreatment system according to claim 1, wherein:
the acid is an inorganic acid; and
the base is a buffer solution.

3. The pretreatment system according to claim 1, wherein
the acid is one type of acid selected from a group consisting of a hydrochloric acid and a nitric acid.

4. The pretreatment system according to claim 1, wherein
the base is one type of base selected from a group consisting of a sodium hydroxide, a potassium hydroxide, ammonia, a Good's buffer solution, a tris buffer solution, and a tris-hydrochloric acid buffer solution.

5. The pretreatment system according to claim 1, wherein:
the acid adding mechanism adds such an amount of acid as to make a pH value of the sample solution equal to or less than 3; and
the base adding mechanism adds such an amount of base as to make the pH value of the sample solution equal to or more than 4.

6. The pretreatment system according to claim 1, where in
in a case where the calcium compound contained in the sample solution is an inorganic salt,
the base adding mechanism adds such an amount of base as to make a pH value of the sample solution equal to or more than 5.

7. A pretreatment method that is performed before measuring calcium ion concentration in a sample solution containing a calcium compound with a calcium ion electrode, the pretreatment method comprising:
an acid adding step of adding acid to the sample solution to ionize the calcium compound in the solution; and
a base adding step of adding base to the sample solution in a state where a calcium ion compound is ionized.

8. The pretreatment method according to claim 7, wherein:
the acid is an inorganic acid; and
the base is a buffer solution.
